# EUROPÄISCHE PATENTSCHRIFT

(11) **EP 2 179 930 B1**
(45) Veröffentlichungstag und Bekanntmachung des Hinweises auf die Patenterteilung: **10.12.2014**
(21) Anmeldenummer: 09174202.3
(22) Anmeldetag: 27.10.2009
(51) Int. Cl.: B65B 35/30, G01G 15/04, B26D 7/30

(54) **Portionier-Linie**
Portioning line
Ligne de mise en portions

(30) Priorität: 27.10.2008 DE 102008053331
(43) Veröffentlichungstag der Anmeldung: 28.04.2010
(73) Patentinhaber: Völkl, Thomas, 83052 Bruckmühl (DE)
(72) Erfinder: Völkl, Thomas, 83052 Bruckmühl (DE)
(74) Vertreter: Alber, Norbert

(56) Entgegenhaltungen:
- EP-A2- 0 882 960
- DE-A1-102005 047 796
- GB-A- 2 276 950
- US-A- 3 974 888
- US-A- 4 368 790

## Beschreibung

### I. Anwendungsgebiet

Vom Handel und den Verbrauchern werden zunehmend in allen Bereichen des Verkaufs abgepackter Lebensmittel Packungseinheiten mit konstant gleich bleibendem Gewicht gefordert, auch im Bereich des Frischfleisches.

### II. Technischer Hintergrund

Frischfleisch wird dabei - aufgeschnitten in dicke Scheiben - z.B. in Portionen von drei bis fünf Scheiben als Portion in einer Schale abgepackt verkauft, abhängig davon, ob es sich um Schnitzel, Kotelett, Grillfleisch, Steaks etc. handelt.

Je größer die einzelnen Fleischstücke sind, und je unterschiedlicher die Ausgangs-Fleischstücke sind, aus denen die Fleischscheiben stammen, umso stärker variiert bereits das Gewicht der einzelnen Fleischscheiben, die beispielsweise bei einem Schlegel je nach Position im Schlegel eine unterschiedliche Fläche besitzen und damit bei gleicher Dicke ein stark unterschiedliches Gewicht.

Je stärker das Gewicht der einzelnen Fleischscheiben variiert, umso schwieriger wird es, mit geringem Arbeitsaufwand und möglichst automatisiert Portionen herzustellen, die nicht nur vorzugsweise die gleiche Anzahl von Scheiben umfassen, sondern auch vom Portionsgewicht innerhalb einer sehr eng vorgegebenen Soll-bandbreite liegen.

Hinzu kommt, dass die Fleischqualität innerhalb der gleichen Art des Fleischstückes variiert, und deshalb Portionen gezielt aus Scheiben unterschiedlicher Qualität zusammengestellt werden, z.B. indem drei Zentrumsscheiben, eine Nackenscheibe und eine Hüftscheibe eine Portion ergeben.

Auch die einschlägigen gesetzlichen Vorschriften erlauben in Abhängigkeit von der Gewichtsangabe auf der Packung nur einen sehr engen Bereich des Ist-Gewichts.

Dieser Bereich darf zwar ohne Mehrberechnung nach oben überschritten werden, dies bedeutet jedoch erhebliche Verluste für den Hersteller. Bei Unterschreiten dagegen drohen ihm empfindliche Sanktionen.

Zusätzlich entsteht dem Hersteller durch das Zusammenstellen der gewichtsgenauen Portionen in der Regel ein erheblicher Arbeitsaufwand, und darüber hinaus können für das Zusammenstellen der gewichtsgenauen Portionen nicht alle Fleischscheiben verwendet werden, so dass ein nicht unerheblicher Anteil von Fleischscheiben anders verwertet werden muss, und in der Regel für geringwertigere Fleischprodukte verwendet werden muss, was den Verlust zusätzlich erhöht.

Bisher wurden die Fleischscheiben in der Regel nur mit grob ähnlichem Gewicht geschnitten, und manuell eine jeweils gleiche Anzahl von Scheiben in Schalen gelegt oder durch Gruppieren auf Wiegebändern automatisch in Schalen gelegt, wobei jedoch meist eine erhebliche Überschreitung des Sollgewichts gegeben war, die anschließend durch manuelle Nachbearbeitung wieder minimiert werden musste, sei es durch Wegschneiden von Fleischteilen oder manuellem Austausch von Fleischscheiben unterschiedlicher Größe zwischen zwei bereits erstellten Portionen.

Es standen die für die Optimierung des Portionsgewichts aufgewandte Arbeitszeit und die damit verbundenen Kosten immer in direkter Konkurrenz zu den dadurch erreichten Einsparungen an Fleischverlusten.

In diesem Zusammenhang ist es aus der US 4,368,790, die den nächstreichenden Stand der Technik bildet, bekannt, mittels einer Erstwaage die hergestellten Portionen zu verwiegen und zu klassifizieren in gewichtskorrekte Portionen, zu schwere Portionen und zu leichte Portionen, und diese auf getrennten Förderern weiter zu transportieren.

Die zu schweren und zu leichten Portionen werden dann einer zweiten Waage zugeführt, die anzeigt, um wieviel die jeweilige Portion zu leicht oder zu schwer ist, woraus der dort stehende Bediener erkennen kann, wie viele Ergänzungsstücke - die den Bruchteil eines Gewichts einer vollständigen Scheibe besitzen - er aus einem hierfür separat zur Verfügung gestellten Vorrat einer Portion hinzufügen muss oder von dieser entfernen muss, um daraus eine gewichtskorrekte Portion herzustellen.

Aus der EP 0 882 960 ist eine Ausgleichsvorrichtung bekannt, die lediglich zwischen gewichtskorrekten und gewichtsfalschen Portionen unterscheidet und bei einer zweiten Verwiegung lediglich das Differenzgewicht zum Sollgewicht anzeigt. Offensichtlich wird dort mit sehr großen Differenzgewichten gerechnet, denn als Vorgehensweise ist angegeben, dass entsprechend dem Differenzgewicht eine entsprechende Anzahl ganzer Scheiben hinzugefügt oder weggenommen werden soll.

### III. Darstellung der Erfindung

### a) Technische Aufgabe

Es ist daher die Aufgabe gemäß der Erfindung, ein Verfahren sowie eine Vorrichtung zu schaffen, die das Herstellen von gewichtsgenauen Portionen, die aus wenigen großen Einzelprodukten wie etwa Fleischscheiben zusammengestellt sind, zu erleichtern und zu verbilligen.

### b) Lösung der Aufgabe

Diese Aufgabe wird durch die Merkmale der Ansprüche 1 und 7 gelöst. Vorteilhafte Ausführungsformen ergeben sich aus den Unteransprüchen.

Indem in jeden Behälter (meist einer Schale) jeweils die gleiche Anzahl von Einzelprodukten (z.B. Fleischscheiben) eingelegt wird und beim Herstellen dieser Einzelprodukte bereits darauf geachtet wird, dass sie jeweils in etwa das gleiche Gewicht besitzen, bewegt sich die Bandbreite der Gewichte der gefüllten Behälter bereits innerhalb einer vorgegebenen, noch etwas groben Bandbreite, deren Einhaltung jedoch nicht unmittelbar kontrolliert werden muss.

Vielmehr werden die einzelnen gefüllten Behälter zwar gewogen, jedoch anschließend lediglich automatisch separiert in Behälter für eine Gutstrecke, deren Gesamtgewicht bereits innerhalb des vorgegebenen engen Soll-Bereiches des Gewichts liegt sowie Zu-Schwer-Behälter, deren Gewicht darüber liegt, und Zu-Leicht-Behälter, deren Gewicht darunter liegt und die jeweils in einem Zu-Schwer-Puffer bzw. Zu-Leicht-Puffer zwischengelagert werden.

Anschließend werden jeweils eine zu leichte Portion aus dem Zu-Leicht-Puffer und eine zu schwere Portion aus dem Zu-Schwer-Puffer auf zwei separaten Waagen nebeneinander bereitgestellt.

Durch Austauschen von Einzelprodukten, also etwa je einer Fleischscheibe, aus der zu schweren Portion gegen ein entsprechendes aus der zu leichten Portion werden deren Gewichte gegeneinander angenähert und befinden sich danach im Idealfall beide innerhalb der Soll-Bandbreite an Gewicht also Portionen. Falls das Austauschen eines Einzelproduktes zwischen den beiden Behältern hiefür noch nicht ausreicht, muss das gleiche statt mit einem mit zwei Einzelprodukten, also beispielsweise je zwei Fleischscheiben, durchgeführt werden.

Sofern der Austausch nicht maschinell automatisch, sondern manuell durch eine Bedienperson erfolgt, kann er anhand der an den Ausgleichswaagen ablesbaren Differenzgewichte erkennen, welche Gewichtsdifferenz herbeigeführt werden muss und danach unter Umständen bereits die Anzahl auszutauschender Einzelprodukte, wie etwa Fleischscheiben, abschätzen und gegebenenfalls auch welche der in den Behältern vorhandenen, eventuell unterschiedlich großen oder unterschiedlich dicken Fleischscheiben sinnvollerweise getauscht werden sollten.

Da sich nach dem Tauschvorgang beide Behälter innerhalb des Soll-Bereichs des Gewichts für gefüllte Behälter befinden, werden beide auf der Gutstrecke abtransportiert.

Sollte eine der getauschten Portionen dies nicht erfüllen, bleibt sie auf der Ausgleichswaage für den nächsten Tauschvorgang, wobei sie eventuell von der Zu-Schwer-Waage auf die Zu-Leicht-Waage gewechselt werden muss.

Beim ersten Verwiegen werden die für zu leicht oder zu schwer ermittelten Portionen nicht nur einem Zu-Leicht- oder Zu-Schwer-Puffer zugeführt werden, sondern mehreren, nach Abweichungsklassen vom Soll-Gewicht gestaffelten, Zu-Leicht-Puffern und Zu-Schwer-Puffern zugeführt .

Beim Gegenüberstellen von einer zu schweren und einer zu leichten Portion auf den Ausgleichswaagen werden diese dann den einander analogen Zu-Leicht- und Zu-Schwer-Puffern entnommen, wodurch die Wahrscheinlichkeit stark erhöht wird, dass im Fall, dass einer der beiden Behälter nach dem Tausch sich innerhalb der Soll-Gewichtsbreite befindet, sich dann auch der andere Behälter innerhalb der Soll-Gewichtsbreite befindet.

Da die Aufteilung in mehrere gestaffelte Zu-Leicht-Puffer und Zu-Schwer-Puffer automatisch erfolgt, und hierdurch der Aufwand an Handarbeit nicht erhöht wird, ist eine Aufteilung in nach Differenzgewichten gestaffelten Zu-Leicht-Puffern und Zu-Schwer-Puffern in mindestens je zwei, besser je vier, Puffer sinnvoll.

Die Treffsicherheit des Verfahrens wird ferner dadurch erhöht, dass das Bereitstellen der Einzelprodukte wie etwa Fleischscheiben in einer solchen Reihenfolge erfolgt, dass die Einzelprodukte in der Reihenfolge ihres Eintreffens an dem Einlegebereich (-station) in die Behälter hintereinander, zumindest für einen bestimmten Zyklus, immer leichter oder immer schwerer werden, sofern sie nicht gleich schwer hergestellt werden können.

Gerade bei Fleischscheiben, die von einem natürlich gewachsenen Fleischstück nacheinander abgetrennt werden, kann dies dadurch erreicht werden, dass die Fleischstücke in der immer analogen Richtung aufgeschnitten werden:

Wenn es sich also um ein beispielsweise sich birnenförmig verjüngendes Fleischstück wie etwa einen Schlegel oder ein Rippenstück handelt, wird das Aufschneiden immer mit dem gleichen, z. B. dickeren Ende, begonnen.

Dies stellt sicher, dass die Fleischscheiben, die aus dem gleichen Fleischstück erzeugt wurden, an der Einlegestation in die Behälter in einer Reihenfolge mit abnehmenden Querschnitt und somit - wenn durch Zusatzmaßnahmen kein tatsächlich gleichbleibendes Gewicht der Fleischscheiben erreicht werden kann - mutmaßlich auch abnehmenden Gewicht innerhalb des Zyklus eines Fleischstückes an der Umsetzstation in die Behälter eintreffen.

Natürlich besteht das vorrangige Ziel darin, beim Aufschneiden der Fleischstücke durch Zusatzmaßnahmen sicherzustellen, dass trotz des sich verändernden Querschnittes der ursprünglichen Fleischstücke die daraus erzeugten Fleischscheiben alle jeweils das gleiche Gewicht in einem sehr engen vorgegebenen Toleranzbereich aufweisen.

Weiterhin wird der bei diesem Verfahren erzielte Ausschuss und auch die Häufigkeit von Austauschmaßnahmen reduziert, indem beim ersten Verwiegen der Portionen, also der gefüllten Behälter, vor dem Separieren jeweils über eine definierte Menge von verwogenen Portionen deren Durchschnittsgewicht ermittelt wird.

Sofern dieses Durchschnittsgewicht außerhalb eines vorgegebenen Soll-Bereiches für das Durchschnittsgewicht der Portionen liegt, wird die vorgelagerte Schneidemaschine automatisch entsprechend beeinflusst, damit die hergestellten Fleischscheiben schwerer oder leichter, meist also geringfügig dicker oder dünner, geschnitten werden.

Um die Klassifizierung der Zu-Schwer-Puffer und Zu-Leicht-Puffer auch optisch zu signalisieren, und darüber hinaus Standfläche einzusparen, können die Zu-Leicht-Puffer und Zu-Schwer-Puffer vorzugsweise übereinander angeordnet werden und zwar - wie auch bei Anordnung nebeneinander - mit dem Gutpuffer bzw. der Gutstrecke dazwischen und mit umso größerem Abstand von der Gutstrecke, je größer das Differenzgewicht zum vorgegebenen Soll-Gewicht der fertigen Portion ist.

Ein weiterer Vorteil des erfindungsgemäßen Verfahrens liegt unter Hygienegesichtspunkten darin, dass nach dem Herstellen der Einzelprodukte, etwa der Fleischscheiben, und dem Einlegen einer entsprechenden Anzahl der Fleischscheiben in die Behälter, wie etwa die Schalen, die einzelnen Fleischscheiben nicht mehr zusätzlich mit anderen Kontaktflächen in Berührung gebracht werden, da sie lediglich in den Schalen verbleiben und bestenfalls zwischen zwei Schalen ausgetauscht werden.

Sie werden jedoch nicht mehr einzeln und vor allem flächig aufliegend auf Transportbändern oder ähnlichen Medien transportiert, die zuvor oder danach auch mit anderen Fleischscheiben in Berührung kamen bzw. kommen, wodurch das Übertragen von Keimen, die an einer Fleischscheibe anhaften, mittels des Transportmediums auf andere Fleischscheiben ausgeschlossen wird.

Zur Durchführung des erfindungsgemäßen Verfahrens besitzt eine Vorrichtung in der Regel einerseits einen Produktförderer, auf dem die Einzelprodukte, also in diesem Fall die Fleischscheiben, herantransportiert werden, sowie einen Behälterförderer, auf dem zumindest die gefüllten Behälter von der Einlegestation abtransportiert, eventuell auch die leeren Behälter herantransportiert werden.

Zwischen Produktförderer und Behälterförderer befindet sich die Einlegestation zum Einlegen der Fleischscheiben vom Produktförderer in die einzelnen Behälter, beispielsweise Schalen.

In Durchlaufrichtung hinter der Einlegestation befindet sich im Behälterförderer eine Erstwaage, meist eine Durchlaufwaage, die alle gefüllten Behälter wiegt. Ein zugeordneter oder nachgeordneter Separierer trennt die verwogenen Portionen in Gutportionen, Zu-Schwer-Portionen und Zu-Leicht-Portionen auf, wobei die Gutportionen unmittelbar mittels des Separierers einen Gutförderer zum Abtransport zur Weiterverarbeitung aufgegeben werden.

Eine besonders einfache Bauform eines Separierers für die nach der Erstverwiegung auf dem Produktförderer weiterlaufenden, gefüllten Schalen, die ab dem Verwiegen als Gutstrecke benutzt wird, besteht darin, seitlich neben dem Gutförderer je einen in Längsrichtung des Gutförderers verlaufenden Schieber anzuordnen, der in Querrichtung über den Gutförderer verschoben werden kann, und eine in diesem Augenblick durchlaufende gefüllte Schale hinüberschiebt auf einen parallel daneben laufenden Zu-Leicht-Förderer bzw. Zu-Schwer-Förderer.

Indem in Längsrichtung am Gutförderer hintereinander, vorzugsweise unmittelbar hintereinander, zwei solcher Schieber angeordnet sind, die sich in ihrer Ruhestellung immer auf einander gegenüberliegenden Seiten des Gutförderers befinden und in ihrer Bewegung miteinander gekoppelt sind, muss die Steuerung lediglich steuern, ob und zu welchem Zeitpunkt die beiden Schieber gemeinsam in Funktion gesetzt werden:

Geschieht dies, wenn sich die gefüllte Schale auf Höhe des ersten Schiebers befindet, wird die Schale nach links, etwa auf den Zu-Leicht-Förderer verschoben, geschieht dies dagegen zum Zeitpunkt, wenn sich die Schale auf Höhe des zweiten Schiebers befindet, wird dadurch die Schale nach rechts, also auf den Zu-Schwer-Förderer, verschoben. Stimmt das Gewicht der Schale, durchläuft diese den Bereich des Separierers, ohne dass die Schieber in Funktion gesetzt werden.

Der Vorteil besteht darin, dass die beiden Schieber immer nur zwischen zwei Endanschlägen hin und her verschoben werden müssen, und immer gemeinsam und zum gleichen Zeitpunkt und um die gleiche Strecke verschoben werden.

Zwar bewirkt dies, dass einer der Schieber sich immer funktionslos von der einen auf die andere Seite des Gutförderers bewegt, dafür muss der wirksame Schieber anschließend nicht in eine Ruheposition leer zurückverfahren werden, wodurch sehr schnelle Zykluszeiten erzielbar sind.

Darüber hinaus ist die Steuerung sehr einfach, da immer nur eine von zwei Endlagen jedes Schiebers angefahren werden muss, was sehr einfach z.B. mittels eines Pneumatikkolbens erreicht werden kann. Ein solcher Separierer kann als einzelnes Bauteil wie eine Brücke über jeden gewünschten Förderer und an jeder gewünschten Stelle gesetzt werden.

Die Zu-Schwer- und Zu-Leicht-Portionen werden dagegen in einem Zu-Schwer-Puffer und einem Zu-Leicht-Puffer, vorzugsweise ausgebildet als Zu-Schwer-Förderer und Zu-Leicht-Förderer mit begrenzter Länge, etwa in Form eines Förderbandes, zwischengespeichert.

In Durchlaufrichtung hinter diesen Puffern ist jeweils eine Ausgleichswaage so angeordnet, dass die Ausgleichswaage für den Zu-Schwer-Puffer und den Zu-Leicht-Puffer nahe nebeneinander liegen. Auf diesen beiden Ausgleichswaagen wird vorzugsweise automatisch aus den jeweiligen Puffern jeweils eine Portion zur Verfügung gestellt, deren Gewicht angezeigt und dann durch Austauschen von Fleischscheiben und anschließende Kontrolle auf der Anzeige der Ausgleichswaage möglichst in beiden Portionen das Soll-Gewicht, also ein Gewicht der Portion innerhalb der vorgegebenen Soll-Bandbreite, die sehr eng ist, hergestellt. Beispielsweise beträgt bei einem Nenngewicht von 200 - 500g einer Portion das Soll-Gewicht, also die Gut-Bandbreite, lediglich z. B. ± 3%.

An die beiden Ausgleichswaagen schließt sich in Durchlaufrichtung wiederum der Gutförderer bzw. ein Zuförderer zum Gutförderer an.

Zusätzlich können von den Ausgleichswaagen Rückführwege zum jeweiligen Zu-Schwer-Puffer oder Zu-Leicht-Puffer vorhanden sein, insbesondere sofern das Ausgleichen der Gewichte auf den Ausgleichswaagen nicht manuell erfolgt.

Im Falle des automatischen Austausches ist an den Ausgleichswaagen zusätzlich ein automatischer Umsetzer mit mindestens zwei Greifarmen zum Ergreifen und Austauschen von Fleischscheiben zwischen den beiden auszugleichenden Portionen vorhanden.

In einer bevorzugten vertikalen Bauform sind alle Puffer und Förderer entlang einer Tragwand und auskragend von der gleichen Seite der Tragwand angeordnet, die sich in Durchlaufrichtung erstreckt, sodass auch die Förderer sich in Verlaufsrichtung der Tragwand erstrecken.

Zum einen reduziert dies die Stellfläche, zum anderen kann die gesamte Antriebsmechanik und elektrische bzw. elektronische Steuerung für die Waagen, Separierer, Förderer und Puffer geschützt innerhalb des Gehäuses dieser Tragwand angeordnet werden.

Die einzelnen Zu-Schwer- bzw. Zu-Leicht-Puffer, die vorzugsweise als Zu-Leicht-Förderer und Zu-Schwer-Förderer mit begrenzter Länge ausgeführt sind, sind dann vorzugsweise übereinander angeordnet mit dem Gutförderer in der Mitte und umso größerem Abstand vom Gutförderer nach oben und unten, je größer die Gewichtsabweichung der darin aufgenommen Portionen ist.

Dennoch sind die Ausgleichswaagen am Ende der Zu-Schwer-Puffer und Zu-Leicht-Puffer vorzugsweise nebeneinander angeordnet, um die Austauscharbeit zu erleichtern.

Der Separierer kann dann z.B. ein Zwischenförderer sein, der zwischen der Erstwaage und den Puffern bzw. der Gutstrecke angeordnet ist und der um sein hinteres Ende herum verschwenkbar ist, so dass sein in Durchlaufrichtung vorderes Ende in der Höhe verstellbar ist und in fluchtende Position zu den Anfängen wahlweise des Gutförderers oder eines des Zu-Schwer-Puffer oder Zu-Leicht-Puffer gebracht werden kann und somit die auf dem Separierer herantransportierten Portionen auf den entsprechenden Förderer bzw. Puffer umgesetzt werden können.

Sofern das Umsetzen von Fleischscheiben vom Produktförderer in die Behälter und/oder zwischen den Behältern auf den Ausgleichswaagen maschinell erfolgt, umfasst der Umsetzer auch einen Vereinzeler, der zunächst die aneinanderliegenden Fleischscheiben auf Abstand zueinander bringt, um sie leichter maschinell ergreifen zu können.

In einer bevorzugten Ausführungsform umfasst die Vorrichtung zum Portionieren auch eine vorgelagerte Schneidemaschine zum Aufschneiden der Fleischstücke in Fleischscheiben, die von der Steuerung der Portioniervorrichtung mitgesteuert wird oder zumindest mit deren Steuerung verbunden ist, sodass bei einem zu hohen Durchschnittsgewicht der Portionen durch Verringern des Scheibengewichts beim Aufschneiden das Durchschnittsgewicht der Portionen wieder besser im Soll-Bereich erzielt werden kann und umgekehrt.

### c) Ausführungsbeispiele

Ausführungsformen sind im Folgenden beispielhaft näher beschrieben. Es zeigen:
- Fig. 1:: eine erste Version der Einlegelinie (nicht Teil der Erfindung),
- Fig. 2:: eine zweite Version der Einlegelinie (gemäß der Erfindung).

In beiden Figuren ist die Durchlaufrichtung 10 während der Bearbeitung von rechts nach links.

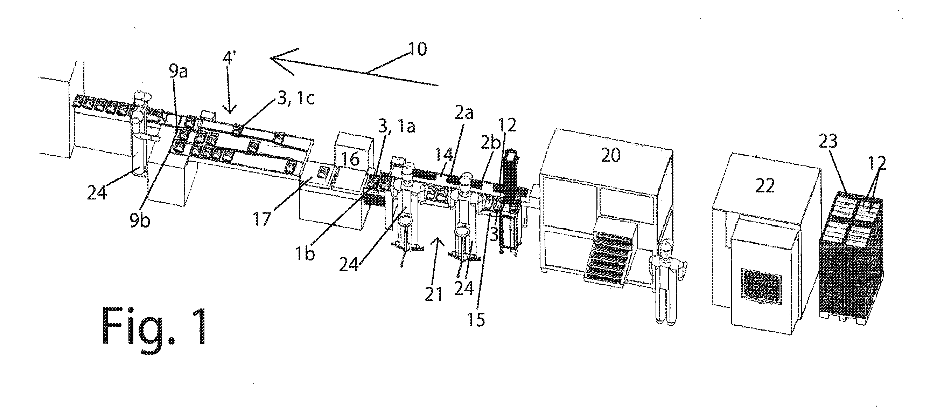

In Figur 1 werden die in Paletten 23 angelieferten Fleischstücke 12 zunächst in einer Froststation 22 heruntergekühlt und meist oberflächlich leicht gefroren und in diesem Zustand in der Schneidmaschine 20 in möglichst gewichtsgenaue und gewichtsgleiche Fleischscheiben 2a, b aufgeschnitten.

Auf einem horizontalen Produktförderer 14 laufen die einzelnen, bereits in eine Vielzahl von Fleischscheiben 2a, b aufgeschnittenen Fleischstücke 12 zu einer Umsetzstation 21 heraus.

Diese Umsetzstation 21 besteht darin, dass ein Behälterförderer 15, der vor oder unter dem Produktförderer 14 vorzugsweise parallel verläuft und leere Behälter, in diesem Fall Schalen 3, zur Verfügung stellt, in welche jeweils von Bedienern 24 eine definierte, vorgegebene Anzahl von Fleischscheiben 2a, b in jede Schale 3 gelegt wird. Dabei wird diese Anzahl von Fleischscheiben 2a, b vorzugsweise der Reihe nach vom Produktförderer 14, also innerhalb eines Fleischstückes 12 auch der Reihe nach innerhalb des Fleischstück 12, entnommen.

Die gefüllten Schalen 3, also Portionen 1a, b, werden vom Behälterförderer 15 direkt einer Erstwaage 16 zugeführt und von dieser automatisch verwogen und danach einem Separierer 17 aufgegeben, der die Schalen 3 und damit die Portionen automatisch - in diesem Fall - drei unterschiedlichen Strecken, nämlich Gut-strecke 4, Zu-Schwer-Strecke 5 und Zu-Leicht-Strecke 6 zuordnet.

In diesem Fall bestehen die drei Strecken in unterschiedlichen nebeneinander liegend Querpositionen ein und desselben, von der Erstwaage 16 wegführenden, breiten Gutförderers 4', der so breit ist, dass drei Schalen 3 hintereinander, d.h. in Durchlaufrichtung 10 des Förderers 4' nebeneinander, darauf Platz finden.

Die in Betrachtungsrichtung der Figur 1 hinterste Spur ist dabei die Gutstrecke 4, sodass dort nur Portionen 1a, b aufgelegt werden, deren Portionsgewicht sich innerhalb des Soll-Bereiches an Gewicht befindet.

Die mittlere und vordere Spur sind einerseits die Zu-Leicht-Strecke und andererseits die Zu-Schwer-Strecke, in die die Portionen 1a, b vom Separierer 17 entsprechend eingeordnet werden.

Der Separierer 17 funktioniert wie auf Seite 7 beschrieben oder er besteht aus einem Schlitten, der in Querrichtung des Förderers 4' vor dessen Beginn angeordnet ist und in fluchtende Position zu den drei Spuren dieses Förderers 4' gebracht werden und dann mittels der in dem Separierer 17 enthaltenden Längsfördereinrichtung die auf dem Separierer 17 einzeln von der Erstwaage 16 übernommene Portion automatisch auf die entsprechende Spur des Förderers 4' aufgibt.

Am Ende des Förderers 4' geht die hintere Spur, die der Gutstrecke 4 entspricht, in einen Gutförderer 4 über, dessen Breite vorzugsweise nur noch das Auflegen einer Schale 3 und nicht mehrerer nebeneinander zulässt.

Mit Hilfe dieses Gutförderers 4 werden die darauf befindlichen Schalen 3 zur Weiterverarbeitung, beispielsweise Verpackung, abtransportiert. Am Ende der beiden anderen Spuren, also der Zu-Leicht-Strecke und der Zu-Schwer-Strecke, befindet sich jeweils eine Ausgleichswaage 9a, b, auf der die jeweils in Durchlaufrichtung vorderste Portion aus der Zu-Leicht-Strecke und Zu-Schwer-Strecke zur Verfügung gestellt und erneut verwogen wird und deren Gewicht auf der Anzeige dieser Ausgleichswaagen dargestellt wird.

An den Ausgleichswaagen 9a, b arbeitet ein weiterer Bediener 24, der - gegebenenfalls abhängig von der Größe des Differenzgewichts der beiden Portionen zum Soll-Gewicht - eine oder auch zwei oder gegebenenfalls mehrere Fleischscheiben 2a, b aus den beiden auf den Ausgleichswaagen 9a, b zur Verfügung gestellten Schalen 3 gegeneinander austauscht und damit deren Gewichte soweit gegeneinander annähert, dass sie sich nach dem Ausgleich beide innerhalb der Soll-Bandbreite an Gewicht befinden, was der Bediener 24 an der ständig aktiven Anzeige der Ausgleichswaagen 9a, b kontrollieren kann.

Ist dies erreicht, legt oder schiebt er die ausgeglichenen Portionen 1a, b von den Ausgleichswaagen 9a, b auf den Gutförderer 4 zum weiteren Abtransport und die nächsten zu leichten und zu schweren Portionen 1 c, d aus der Zu-Leicht-Strecke und der Zu-Schwer-Strecke werden auf den Ausgleichswaagen 9a, b zur Verfügung gestellt.

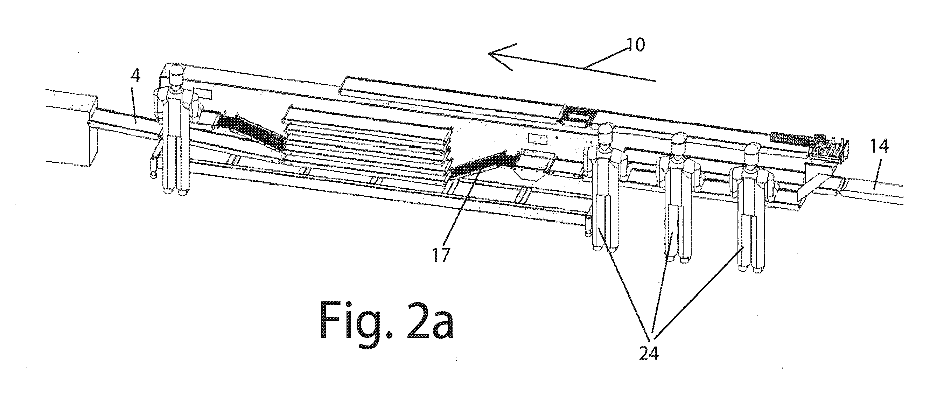

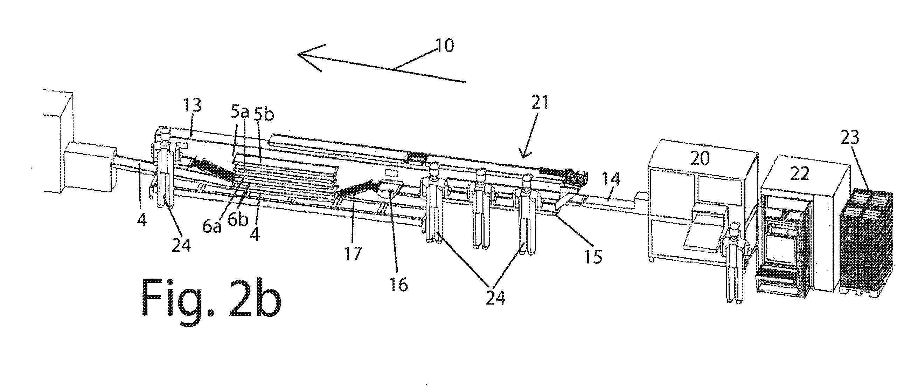

Figur 2b zeigt eine Einlegelinie, von der der reine Einlegeteil in Figur 2a vergrößert dargestellt ist, der sich von der Lösung der Figur 1 unter anderem dadurch unterscheidet, dass nach dem Separierer 17 die Gutstrecke, die Zu-Schwer-Strecke und die Zu-Leicht-Strecke als separate Gutförderer 4, Zu-Schwer-Förderer und Zu-Leicht-Förderer ausgebildet sind und zusätzlich dabei nicht nur ein sondern jeweils zwei Zu-Schwer-Förderer 5a, b und Zu-Leicht-Förderer 6a, b als einzelne Förderer vorhanden und übereinander als Förderer mit begrenzter Länge angeordnet sind.

Von den somit fünf übereinander liegenden Förderern 4, 5a, b, 6a, b ist in diesem Fall der unterste der Gutförderer 4, dessen Länge über das Ende der anderen Förderer in Durchlaufrichtung 10 hinaus zum Abtransport der Gutportionen in die Weiterverarbeitung weitergeht.

Der Separierer 17 zwischen der Erstwaage 16 und den weiterführenden Förderern besteht in einem Zwischenförderer, der um eine Achse parallel zu seiner hinteren Stirnfläche verschwenkbar ist, so dass sein in Durchlaufrichtung 10 vorderes Ende auf Höhe und unmittelbar vor dem Beginn der jeweiligen Zu-Schwer-Förderer 5a, b bzw. Zu-Leicht-Förderer 6a, b gebracht werden kann und die auf dem Separierer 17 befindliche einzelne Portion (nicht dargestellt) auf den jeweiligen Förderer weiter gegeben wird.

Ein analog umgekehrter Zwischenförderer 17' ist um sein vorderes Ende verschwenkbar, welches sich nahe an daneben angeordneten Ausgleichswaagen 9ab, b befindet, während sein hinteres Ende in fluchtende Lage zu dem Ende eines der Zu-Schwer-Förderer oder Zu-Leicht-Förderer 5a, b, 6a, b gebracht werden kann, um daraus die jeweils vorderste Portion zu entnehmen und auf einer der beiden nebeneinander befindlichen Ausgleichswaagen 9a, b zu transportieren und abzulegen.

Dort nimmt wiederum ein Bediener 24 den Gewichtsausgleich durch Austausch von einer oder mehreren Fleischscheiben 2a, b vor und legt dann die Gutportionen manuell auf dem Gutförderer 4 ab.

Alle Förderer 5a, b, 6a, b, 4, 17, 17' sind bei der Lösung der Figur 2 parallel verlaufend zu und zur gleichen Seite hin auskragend vor einer Tragwand 13 angeordnet, in der die gesamte Antriebsmechanik für diese Förderer und auch die Steuerungselektronik geschützt untergebracht sind.

Lediglich der Produktförderer 14, mit dem die aufgeschnittenen Fleischstücke 2a, b angeliefert werden, befindet sich eventuell statt vor der Tragwand 13 im Querschnittsbereich der Tragwand 23 oder auf der Oberseite der Tragwand 13 und damit ebenfalls oberhalb des Behälterförderers 15, an dessen Beginn als Umsetzstation 21 wiederum die Bediener 24 das Umsetzen manuell durchführen.

### BEZUGSZEICHENLISTE

- 1a, b: Portion
- 2a, b: Fleischscheibe
- 3: Schale
- 4, 4': Gut-Strecke, Gut-Förderer
- 5a, b: Zu-Schwer-Puffer, Zu-Schwer-Förderer
- 6a, b: Zu-Leicht-Puffer, Zu-Leicht-Förderer
- 7: Zu-Schwer-Portion
- 8: Zu-Leicht-Portion
- 9a,: b Ausgleichswaage
- 10: Durchlaufrichtung
- 10': Erstreckungsrichtung
- 11: Steuerung
- 12: Fleischstück
- 13: Tragwand
- 14: Produktförderer
- 15: Behälterförderer
- 16: Erstwaage
- 17: Separierer
- 17': Zwischenförderer
- 18: Einleger
- 19: Vereinzeler
- 20: Schneidemaschine
- 21: Einlegestation
- 22: Froststation
- 23: Palette
- 24: Bediener

## Patentansprüche

1. Verfahren zum Herstellen gewichtsgenauer Portionen (1 a, b), die aus großen Einzelprodukten, insbesondere Fleischscheiben (2a, b..), mit variierendem Gewicht zusammengesetzt sind, in Behältern, insbesondere in Schalen (3),
a) Zurverfügungstellen und Heranführen der Einzelprodukte einerseits und der Behälter andererseits,
b) Einlegen einer Anzahl, insbesondere immer gleichen Anzahl, von Einzelprodukten in jeden Behälter, insbesondere automatisch,
c) Wiegen der einzelnen gefüllten Behälter,
d) automatisches Separieren der gewogenen Behälter in eine Gutstrecke (4) sowie wenigstens einen Zu-Schwer-Puffer (5) und wenigstens einen Zu-Leicht-Puffer (6),
e) Bereitstellen jeweils einer zu leichten Portion (8) aus dem Zu-Leicht-Puffer (6) und einer zu schweren Portion (7) aus dem Zu-Schwer-Puffer (5) nebeneinander auf separaten Ausgleichs-Waagen (9a, b),
f) Austauschen, insbesondere automatisches Austauschen, von einer oder bei Bedarf auch zwei Einzelprodukten aus der zu leichten Portion (8) gegen solche aus der zu schweren Portion (7) und umgekehrt, bis beide Portionen (7, 8) innerhalb des Soll-Gewichtsbereichs liegen,
g) Abtransport aller Portionen, die innerhalb des Sollgewichts liegen, insbesondere auf der Gutstrecke (4), **gekennzeichnet durch**
h) das Bereitstellen der Einzelprodukte in einer solchen Reihenfolge erfolgt, dass die Einzelprodukte in einer langen Abfolge zyklisch immer leichter bzw. immer schwerer werden.

2. Verfahren nach Anspruch 1,
**dadurch gekennzeichnet, dass**
die Aufteilung auf jeweils mehrere Zu-Schwer- und Zu-Leicht-Puffer (5a, b... 6a, b...) mit unterschiedlichen Gewichtsklassen erfolgt und die Bereitstellung einer zu leichten (8) und einer zu schweren Portion (7) nebeneinander jeweils aus dem analog abweichenden Zu-Schwer-Puffer (z.B. 5b) und Zu Leicht-Puffer (z.B. 6b) erfolgt.

3. Verfahren nach Anspruch 2,
**dadurch gekennzeichnet, dass**
das Bereitstellen der Fleischscheiben (2a, b...) als Einzelprodukte in einer solchen Reihenfolge erfolgt, dass die Fleischscheiben (2a, b) in der Reihenfolge ihres Vorliegens innerhalb des ursprünglichen Fleischstückes (12) angeliefert werden mit Beginn immer von der gleichen Seite dieser Art des Fleischstückes her.

4. Verfahren nach einem der vorhergehenden Ansprüche,
**dadurch gekennzeichnet, dass**
aus den ermittelten Einzelgewichten der Portionen (1a, b...) beim ersten Wiegevorgang über eine definierte Menge von Portionen (1a, b...) deren Durchschnittsgewicht ermittelt wird und bei Verlassen des Sollbereichs für das Durchschnittsgewicht die vorgelagerte Schneidemaschine (20) automatisch beeinflusst wird in Bezug auf Gewichtsveränderung der herzustellenden Fleischscheiben (2a, b..).

5. Verfahren nach einem der vorhergehenden Ansprüche,
**dadurch gekennzeichnet, dass**
das Einlegen in Schalen (3) unmittelbar nach dem Herstellen der Einzelprodukte erfolgt und insbesondere die vereinzelten Einzelprodukte nicht mehr mit anderen zusätzlichen Kontaktflächen in Berührung gebracht werden.

6. Verfahren nach einem der vorhergehenden Ansprüche,
**dadurch gekennzeichnet, dass**
- die Zu-Leicht-Puffer (6a, b...) und die Zu-Schwer-Puffer (5a, b...) nebeneinander angeordnet werden, und/oder
- die Zu-Leicht-Puffer (6a, b..) und die Zu-Schwer-Puffer (5a, b...) mehr als zwei, insbesondere mehr als fünf Schalen (3) aufnehmen können.

7. Vorrichtung zum Herstellen gewichtsgenauer Portionen (1a, b), die aus großen Einzelprodukten, insbesondere Fleischscheiben (2a, b..), mit variierendem Gewicht zusammengesetzt sind, in Behältern, insbesondere in Schalen (3), mit
- einem Produktförderer (14),
- einem Behälterförderer (15),
- einer Einlegestation (21) zum Einlegen von Produkten in die Behälter,
- einer Erstwaage (16) hinter der Einlegestation (21),
- einem Separierer (17) zum Klassifizieren und Verteilen der gefüllten Behälter in Gewichtsklassen,
- einem Gutförderer (4) zum Abtransport der im Soll-Gewichtsbereich liegenden gefüllten Behälter,
- wenigstens einem Zu-Schwer-Förderer (5), und
- wenigstens einem Zu-Leicht-Förderer (6),
**dadurch gekennzeichnet, dass**
hinter dem Separierer (17) Ausgleichswaagen (9a, b) angeordnet sind, an die sich Gutförderer (4) anschließen und
mehrere, nach Abweichungsklassen gestaffelte, Zu-Schwer-Förderer (5) und Zu-Leicht-Förderer (6) vorhanden sind.

8. Vorrichtung nach Anspruch 7,
**dadurch gekennzeichnet, dass**
nach dem Separierer (17) und vor den Ausgleichswaagen (9a, b) ein Zu-Schwer-Puffer (5) und ein Zu-Leicht-Puffer (6), insbesondere als Zu-Schwer-Förderer (6) und Zu-Leicht-Förderer (6), angeordnet sind.

9. Vorrichtung nach einem der vorhergehenden Ansprüche,
**dadurch gekennzeichnet, dass**
- ein Zu-Schwer-Puffer (5) und ein Zu-Leicht-Puffer (6), insbesondere auch die Gutstrecke (4), übereinander angeordnet sind, und/oder
- die Ausgleichswaagen (9a, b) nebeneinander angeordnet sind.

10. Vorrichtung nach einem der vorhergehenden Ansprüche,
**dadurch gekennzeichnet, dass**
jede Ausgleichswaage (9a, b) am Ende je eines des Zu-Leicht-Puffers (6) und des Zu-Schwer-Puffers (5) angeordnet ist.

11. Vorrichtung nach einem der vorhergehenden Ansprüche,
**dadurch gekennzeichnet, dass**
- der Separierer (17) in Bewegungsrichtung des Behälterbandes (15) hintereinanderliegend zwei quer über das Band (15) verschiebbare Schieber aufweist, die immer gemeinsam bewegt werden und sich in der Ruhestellung auf einander gegenüberliegenden Seiten des Bandes (15) befinden., oder
- der Separierer (17) ein Zwischenförderer ist, der um seine hintere, der Erstwaage (16) benachbarte, Umlenkrolle herum mit dem vorderen Ende in der Höhe verschwenkbar ist und in fluchtende Position zu den Anfängen von Gutförderer (4), Zu-Schwer-Förderer (5) und Zu-Leicht-Förderer (6) verlagert werden kann.

12. Vorrichtung nach einem der vorhergehenden Ansprüche,
**dadurch gekennzeichnet, dass**
- alle Puffer (4, 5, 6) bzw. Förderer an einer Tragwand (13) angeordnet sind, insbesondere parallel zur Erstreckungsrichtung (10') der Tragwand (13) verlaufend und im Falle des seitlichen Auskragens von der Tragwand (13) zur gleichen Seite hin auskragend, und insbesondere
- in der Tragwand (13) die gesamte Antriebsmechanik und Steuerung für die Vorrichtung, insbesondere für die Förderer (4, 5, 6), angeordnet ist.

13. Vorrichtung nach einem der vorhergehenden Ansprüche,
**dadurch gekennzeichnet, dass**
an der Einlegestation (21) ein Einleger (18) zum Umsetzen der Produkte, insbesondere Fleischscheiben (2a, b), in die Behälter, insbesondere Schalen (3), vorhanden ist.

14. Vorrichtung nach einem der vorhergehenden Ansprüche,
**dadurch gekennzeichnet, dass**
der Einleger (18) einen Vereinzeler (19) zum Vereinzeln der aneinander liegenden Fleischscheiben (2a, b) aufweist.

15. Vorrichtung nach einem der vorhergehenden Ansprüche,
**dadurch gekennzeichnet, dass**
die Vorrichtung eine Schneidemaschine (20) zum Aufschneiden der Fleischstücke (12) in Fleischscheiben (2a, b) umfasst.

16. Vorrichtung nach einem der vorhergehenden Ansprüche,
**dadurch gekennzeichnet, dass**
die Steuerung (11) der Vorrichtung die Schneidmaschine (20) im Hinblick auf Veränderung der Dicke und damit des Gewichtes der Fleischscheiben (2a, b) beeinflussen kann.

## Claims

1. A method for producing weight-precise portions (1a, b) including large individual products, in particular meat slices (2a, b ...) with variable weight, in containers, in particular in dishes (3), including the steps:
a) providing and feeding the individual products on the one side and the containers on the other;
b) inserting a number, in particular always an identical number of the individual products in each container, in particular automatically;
c) weighing the individual filled containers;
d) automatically separating the weighed containers into a good quality path (4) and at least one excess-weight buffer (5) and at least one low-weight buffer (6);
e) providing a respective low-weight portion (8) from the low-weight buffer (6) and an excessive-weight portion (7) from the excessive-weight buffer (5) adjacent to one another on separate balancing scales (9a, b);
f) replacing, in particular automatically replacing one or optionally also two individual products from the low-weight portion (8) with individual products from the excessive-weight portion (7) and vice versa until both portions (7, 8) are within a nominal weight range.
g) conveying all portions that are within the nominal weight, in particular on the good quality path (4);
**characterized in that**
h) providing the individual products in a sequence so that the individual products in a long sequence are becoming cyclically lighter or heavier.

2. The method according to claim 1
**characterized in that**
the separation into plural respective excess-weight buffers and low-weight buffers (5a, b... 6a, b...) is performed with different weight classes and providing a low-weight portion (8) and an excess-weight portion (7) adjacent to one another is respectively performed from an analogously deviating excess-weight buffer (e.g. 5b) and low-weight buffer (e.g. 6b).

3. The method according to claim 2
**characterized in that**
providing the meat slices (2a,b ...) as individual products is performed in a sequence so that the meat slices (2a, b ...) are delivered in a sequence as they are provided within an original piece of meat (12) always starting from an identical side of a particular type of piece of meat.

4. The method according to one of the previous claims
**characterized in that**
an average weight is determined from the determined individual weights of the portions (1a, b...) during a first weighing process over a defined number of the portions (1a, b...) and a predisposed cutting machine (20) is automatically influenced with respect to a weight of the meat slices (2a, b ..) to be produced when the average weight deviates from the nominal range.

5. The method according to one of the previous claims,
**characterized in that**
inserting into dishes (3) is performed directly after producing the individual products and, in particular the separated individual products are not brought into contact with other additional contact surfaces.

6. The method according to one of the previous claims
**characterized in that**
- the low-weight buffers (6a, b...) and the excess-weight buffers (5a, b ...) are arranged adjacent to one another and/or
- the low-weight buffers (6a, b ...) and the excess-weight buffers (5a, b ...) can receive more than two, in particular more than five dishes (3).

7. A device for producing weight-precise portions (1a, b), including large individual products, in particular meat slices (2a, b) with variable weight in containers, in particular dishes (3), comprising
- a product conveyor (14);
- a container conveyor (15);
- an insertion station (21) for inserting products into the containers;
- an initial scale station (16) behind the insertion station (21);
- a separator (17) for classifying and distributing the filled containers into weight classes;
- a good quality conveyor (4) for transporting the filled containers that are within the nominal weight range;
- at least one excess-weight conveyor (5); and
- at least one low-weight conveyor (6),
**characterized in that**
balancing scales (9a, b) are arranged behind the separator (17), wherein the balancing scales connect to the good quality conveyor (4); and
plural excess-weight conveyors (5) and low-weight conveyors (6) that are arranged according to deviation classes are provided.

8. The device according to claim 7
**characterized in that**
an excess-weight buffer (5) and a low-weight buffer (6), in particular configured as an excess-weight conveyor (5) or a low-weight conveyor (6) are arranged downstream of the separator (17) and upstream of the balancing scales (9a, b).

9. The device according to one of the previous claims
**characterized in that**
- an excess-weight buffer (5) and a low-weight buffer (6), in particular also the good quality path (4) are arranged on top of one another and/or
- the compensation scales (9a, b) are arranged adjacent to one another.

10. The device according to one of the previous claims
**characterized in that**
each compensation scale (9a, b) is arranged at an end of a respective low-weight buffer (6) and a respective excess-weight buffer (5).

11. The device according to one of the preceding claims
**characterized in that**
- the separator (17) includes two slides that are arranged behind one another in movement direction of the container band (15) and moveable in transversal direction over the band (15), wherein the slides are always moved jointly and are arranged in a resting position on opposite sides of the band (15) and/or
- the separator (17) is an intermediary conveyor which is elevation pivotable with its front end about its rear pulley that is adjacent to the initial scale (16) and wherein the intermediary conveyor is moveable into an aligned position relative to beginnings of the good product conveyor (4), the excess-weight conveyor (5) and the low-weight conveyor (6).

12. The device according to one of the previous claims
**characterized in that**
- all buffers (4, 5, 6) or conveyors are arranged at a support wall (13), in particular parallel to an extension (10)' of the support wall (13) and in case they extend laterally from the support wall (13), they extend to an identical side, and in particular
- an entire drive mechanism and control for the device, in particular for the conveyors (4, 5, 6) is arranged in the support wall (13).

13. The device according to one of the previous claims
**characterized in that**
an insertion device (18) for transferring the products, in particular the meat slices (2a, b) into the containers, in particular the dishes (3) is provided at the insertion station (21).

14. The device according to one of the previous claims
**characterized in that**
the insertion device (18) includes an individualizer (19) for individualizing meat slices (2a, b) that contact one another.

15. The device according to one of the preceding claims
**characterized in that**
the device includes a cutting machine (20) for cutting up meat pieces (12) into meat slices (2a, b).

16. The device according to one of the previous claims
**characterized in that**
a control (11) of the device is configured to influence the cutting machine (20) with respect to changes in thickness and thus of the weight of the meat slices (2a, b).

## Revendications

1. Procédé de préparation de portions de poids précis (1a, b), qui sont composés de gros produits individuels, en particulier de tranches de viande (2a, b, ...), de poids variables, dans des récipients, en particulier dans des coupes (3), comprenant les étapes consistant à :
a) mettre à disposition et acheminer des produits individuels, d'une part, et des récipients, d'autre part,
b) déposer un certain nombre, en particulier un nombre toujours égal, de produits individuels dans chaque récipient, en particulier en mode automatique,
c) peser les récipients individuels remplis,
d) séparer automatiquement les récipients pesés sur un parcours d'articles (4) ainsi qu'au moins sur un tampon de portions trop lourdes (5) et au moins un tampon de portions trop légères (6),
e) disposer respectivement une portion trop légère (8) provenant du tampon de portions trop légères (6) et une portion trop lourde (7) provenant du tampon de portions trop lourdes (5) l'une à côté de l'autre sur des balances compensatrices séparées (9a, b),
f) échanger, en particulier échanger automatiquement, un ou, en cas de besoin, également deux produits individuels issus de la portion trop légère (8) contre de tels produits provenant de la portion trop lourde (7) et vice versa jusqu'à ce que les deux portions (7, 8) se situent dans la plage de poids théoriques, et
g) évacuer toutes les portions qui se situent dans le poids théorique en particulier sur le parcours d'articles (4),
**caractérisé en ce que**
h) la préparation des produits individuels se fait dans une succession telle que les produits individuels deviennent de manière cyclique de plus en plus légers ou de plus en plus lourds dans une longue suite.

2. Procédé selon la revendication 1,
**caractérisé en ce que**
la distribution sur respectivement plusieurs tampons de portions trop lourdes et de portions trop légères se fait avec différentes classes de poids et la préparation d'une portion trop légère (8) et d'une portion trop lourde (7) l'une à côté de l'autre se fait respectivement à partir du tampon de portions trop lourdes (par exemple 5b) et du tampon de portions trop légères (par exemple 6b) déviant de manière analogue.

3. Procédé selon la revendication 2,
**caractérisé en ce que**
la préparation des tranches de viande (2a, b, ...) sous la forme de produits individuels se fait dans une succession telle que les tranches de viande (2a, b) soient fournies dans l'ordre de leur présentation dans le morceau de viande original (12) en partant toujours du même côté de ce type de morceau de viande.

4. Procédé selon l'une quelconque des revendications précédentes, **caractérisé en ce que**
l'on calcule à partir des poids individuels déterminés des portions (1a, b, ...) lors de la première opération de pesée sur une quantité définie de portions (1a, b, ...), leur poids moyen et, en sortant de la plage théorique pour le poids moyen, la machine de coupe préinstallée (20) est automatiquement influencée eu égard à la variation de poids des tranches de viande (2a, b, ...) à découper.

5. Procédé selon l'une quelconque des revendications précédentes, **caractérisé en ce que**
le dépôt dans des coupes (3) se fait directement après l'élaboration des produits individuels et, en particulier, les produits individuels isolés ne sont amenés en contact avec d'autres surfaces de contact supplémentaires.

6. Procédé selon l'une quelconque des revendications précédentes, **caractérisé en ce que** :
- les tampons de portions trop légères (6a, b, ...) et les tampons de portions trop lourdes (5a, b, ...) sont aménagés l'un à côté de l'autre et/ou
- les tampons de portions trop légères (6a, b, ...) et les tampons de portions trop lourdes (5a, b, ...) ne peuvent pas recevoir plus de deux, en particulier plus de cinq coupes (3).

7. Dispositif de préparation de portions de poids précis (1a, b), qui sont constituées de gros produits individuels de poids variables, dans des récipients (2a, b), en particulier dans des coupes (3), comprenant :
- un transporteur de produits (14),
- un transporteur de récipients (15),
- un poste de dépôt (21) pour déposer des produits dans les récipients,
- une première balance (16) derrière le poste de dépôt (21),
- un séparateur (17) pour classer et distribuer les récipients remplis en classes de poids,
- un transporteur d'articles (4) pour évacuer les récipients remplis se situant dans la plage de poids théoriques,
- au moins un transporteur de portions trop lourdes (5) et
- au moins un transporteur de portions trop légères (6),
**caractérisé en ce que**
l'on aménage derrière le séparateur (17) des balances compensatrices (9a, b) auxquelles se raccordent les transporteurs d'articles (4) et
plusieurs transporteurs de portions trop lourdes (5) et transporteurs de portions trop légères (6) échelonnés en fonction des classes d'écart sont présents.

8. Dispositif selon la revendication 7,
**caractérisé en ce que**
l'on aménage après le séparateur (17) et avant les balances compensatrices (9a, b) un tampon de portions trop lourdes (5) et un tampon de portions trop légères (6), en particulier comme transporteur de portions trop lourdes (6) et comme transporteur de portions trop légères (6).

9. Dispositif selon l'une quelconque des revendications précédentes,
**caractérisé en ce que** :
- un tampon de portions trop lourdes (5) et un tampon de portions trop légères (6), en particulier également le parcours d'articles (4), sont aménagés l'un au-dessus de l'autre, et/ou
- les balances compensatrices (9a, b) sont aménagées l'une à côté de l'autre.

10. Dispositif selon l'une quelconque des revendications précédentes,
**caractérisé en ce que**
chaque balance compensatrice (9a, b) est aménagée à l'extrémité respective de l'un ou l'autre du tampon de portions trop légères (6) et du tampon de portions trop lourdes (5).

11. Dispositif selon l'une quelconque des revendications précédentes,
**caractérisé en ce que** :
- le séparateur (17) présente dans le sens de déplacement de la bande transporteuse de récipients (15), l'une derrière l'autre, deux coulisseaux déplaçables transversalement sur la bande (15), qui sont déplacés toujours conjointement et se trouvent en position de repos sur les côtés de la bande (15) en regard l'un de l'autre, ou
- le séparateur (17) est un transporteur intermédiaire qui peut pivoter en hauteur avec l'extrémité avant autour de son rouleau de renvoi arrière voisin de la première balance (16) et peut être déplacé en position d'alignement avec les départs du transporteur d'articles (4), du tampon de portions trop lourdes (5) et du tampon de portions trop légères (6).

12. Dispositif selon l'une quelconque des revendications précédentes,
**caractérisé en ce que**
- tous les tampons (4, 5, 6) ou les transporteurs sont aménagés sur une paroi portante (13), s'étendant en particulier parallèlement à la direction d'extension (10') de la paroi portante (13) et, dans le cas du porte-à-faux latéral, faisant saillie de la paroi portante (13) vers le même côté et, en particulier,
- le mécanisme d'entraînement tout entier avec la commande pour le dispositif, en particulier pour les transporteurs (4, 5, 6) est aménagé sur la paroi portante (13).

13. Dispositif selon l'une quelconque des revendications précédentes,
**caractérisé en ce que**
il est prévu dans le poste de dépôt (21) un dispositif de dépôt (18) pour transférer les produits, en particulier des tranches de viande (2a, b) dans les récipients, en particulier des coupes (3).

14. Dispositif selon l'une quelconque des revendications précédentes,
**caractérisé en ce que**
le dispositif de dépôt (18) présente un séparateur (19) pour séparer les tranches de viande (2a, b) adjacentes.

15. Dispositif selon l'une quelconque des revendications précédentes,
**caractérisé en ce que**
le dispositif comprend une machine de coupe (20) pour découper les morceaux de viande (12) en tranches de viande (2a, b).

16. Dispositif selon l'une quelconque des revendications précédentes,
**caractérisé en ce que** :
la commande (11) du dispositif peut influencer la machine de coupe (20) eu égard à la variation de l'épaisseur et donc du poids des tranches de viande (2a, b).
